# EUROPEAN PATENT SPECIFICATION

(11) **EP 3 635 243 B1**
(45) Date of publication and mention of the grant of the patent: **05.01.2022**
(21) Application number: 18798541.1
(22) Date of filing: 08.05.2018
(51) Int. Cl.: F03D 1/04, F03D 3/00, F03D 3/04, F03D 9/25

(54) **WIND-POWER STATION FOR POWER GENERATION**
WINDKRAFTANLAGE ZUR STROMERZEUGUNG
CENTRALE ÉOLIENNE POUR LA PRODUCTION D'ÉNERGIE

(30) Priority: 11.05.2017 NO 20170780
(43) Date of publication of application: 15.04.2020
(73) Proprietor: Ventum Dynamics AS, 4019 Stavanger (NO)
(72) Inventor: BISSET-NILSEN, Christopher Andrew, 4056 Tananger (NO)
(74) Representative: Håmsø Patentbyrå AS
(86) International application number: PCT/NO2018/050120
(87) International publication number: WO 2018/208169

(56) References cited:
- EP-A1- 2 762 719
- EP-A1- 2 762 719
- EP-A2- 2 264 309
- WO-A1-2006/066310
- WO-A1-2009/012716
- DE-A1-102013 101 725
- FR-A- 1 062 631
- US-A- 4 452 046
- US-A1- 2008 023 964
- US-A1- 2008 258 469
- US-A1- 2015 021 913

## Description

The present invention relates to a wind-power station. More specifically, the present invention relates to a wind-power station for generating power from the kinetic energy of atmospheric air masses, the wind-power station comprising a symmetric turbine housing; an electric generator arranged in the turbine housing, the generator having a substantially vertically oriented driveshaft; a multi-bladed wind wheel mounted substantially horizontally on the vertical driveshaft of the generator; a wind receiver comprising annular guiding surfaces, the guiding surfaces being arranged to change the direction of the airflow in towards the multi-bladed wind wheel.

DE 20 2013 011 686 discloses a prior-art wind-power station for power generation. A wind receiver of the known technical solution is formed as a symmetric body. The body has a conical shape towards the top and has the purpose of changing the direction of the airflow and direct the airflow towards a turbine blade. Inside the symmetric body, an electric generator is installed. On the top of the vertical driveshaft of the generator, a horizontal multi-bladed wind wheel made in the form of an axial turbine is installed. Over the wind wheel, a disc-shaped deflector is installed. The diameter of the deflector is larger than the diameter of the turbine. The disc-shaped deflector is further provided with solar cells converting solar energy into electrical energy.

One of the drawbacks of the known technical solution is that considerable eddy currents form in front of the turbine wheel, arising when the air masses move from the bottom of the symmetric body to the top thereof, and there is also considerable formation of eddy currents / turbulence behind the wind turbine. The turbulent flow reduces the output of the wind-power station and increases the aerodynamic resistance of the entire structure. Another drawback of the known technical solution lies in the fact that the electric generator, installed in the symmetric housing, lacks supply air cooling the generator. This may lead to overheating and damage affecting the operation and reducing the life of the wind-power station.

The website www.aerogreen.info which is considered the closest prior art, describes another wind-power station for power generation in which the turbine housing is provided with several annular guiding surfaces which have for their purpose to change the direction of the airflow and guide the airflow to the turbine blades mounted inside an annular cowling. The turbine consists of two multi-bladed wind wheels, a lower one and an upper one. The lower turbine wheel is a wind wheel fixedly installed in the turbine housing and has for its purpose to direct the airflow in front of the upper turbine wheel. The upper turbine wheel is a runner. The runner is connected to an electric generator, installed inside the turbine housing, via a vertical driveshaft.

The spherical design of the known technical solution reduces undesired air resistance, both at and behind the turbine housing. Still, there is eddy formation on the guiding surfaces, creating turbulence before / upstream of the turbine blades, which reduces the total efficiency of the turbine. Another drawback of this known technical solution is the lack of supply air and cooling of the electric generator installed in the inner symmetric body. This increases the risk of overheating and a possible breakdown of the generator, which may further lead to increased operation costs of the plant. A further drawback of the known technical solution is energy loss at the blade ends. The loss is due to overflow of the airflow from the bottom side to the top side, upstream to downstream, of the rotating runner and arises between the inner side of the cowling and the blade ends, which reduces the efficiency of the wind-power station.

US4452046, US2008/023964 and EP2762719 are other examples of prior art.

The invention has for its object to remedy or reduce at least one of the drawbacks of the prior art or at least provide a useful alternative to the prior art.

The purpose of the present invention is to provide a wind turbine which ensures a significantly high efficiency by reducing eddy formation inside the turbine housing. In advantageous embodiments, the invention also has for its purpose to reduce the loss factor at the blade ends and to ensure sufficient heat diversion from the electric generator installed in the symmetric body and thereby increase the general lifetime, reliability and autonomy of the plant.

The object is achieved through the features that are specified in the description below and in the claims that follow.

The invention is defined by the independent claim. The dependent claims define advantageous embodiments of the invention.

The invention relates more specifically to a wind-power station for power generation from the kinetic energy of atmospheric air masses, the wind-power station comprising:
- a symmetric turbine housing;
- an electric generator arranged in the turbine housing, the generator having a substantially vertically oriented driveshaft;

- a multi-bladed wind wheel mounted substantially horizontally on the vertical driveshaft of the generator; and
- a wind receiver comprising annular guiding surfaces, the guiding surfaces being arranged to change the direction of the airflow in towards the multi-bladed wind wheel. The wind-power station is characterized by the wind receiver comprising three or more annular guiding surfaces, wherein
each of the guiding surfaces has an aerofoil-shaped profile, whereby the three or more annular guiding surfaces form two or more channels between them, arranged to accelerate an airflow in towards said multi-bladed wind wheel and reduce the turbulence in front / upstream of the wind wheel.

The three or more annular guiding surfaces are formed with an aerodynamic/aircraft-wing-shaped cross-sectional profile. This makes two or more oblong conical channels be formed, having for their purpose to change the direction of the airflow in a smooth manner and direct it to the turbine blades. The slotted channels give an even, laminar flow along the surface, which reduces the turbulence in the flow in front of the turbine blades, thus improving the operational conditions of the turbine and increasing the efficiency of the wind turbine.

In one embodiment, the wind-power station includes exactly three of the above-mentioned guiding surfaces with an aerodynamic cross-sectional profile. This will be sufficient to achieve an accelerating, laminar airflow. The same effect may be achieved by more than three guiding surfaces, but then at an increased production cost.

In one embodiment, the turbine housing may be formed with vents, which may provide cooling of the generator. A particularly favourable cooling effect may be achieved if the turbine housing is formed with an even distribution of vents along the circumference in the lower part of the wind turbine, which may ensure airflow therethrough and cooling of the generator independently of the wind direction.

To reduce loss at the blade ends of the turbine, the wind-power station may, in an advantageous embodiment, be provided with an annular cowling arranged around the wind wheel, wherein an inner surface of the annular cowling is formed with a projection covering the radial outer edge of the wind wheel downstream of the plane of rotation of the wind wheel. This may prevent airflow leakage on the outside of the wind wheel and thereby reduce the loss factor and increase the efficiency of the wind-power station.

To be able to increase power generation, and even ensure power generation in the absence of wind, the outer surfaces of the wind-power station may be entirely or partially covered with photovoltaic elements (solar cells) for converting solar radiation into electrical energy.

In what follows, an example of a preferred embodiment is described, which is visualized in the accompanying drawings, in which:
- Figure 1: shows a side view and a cross section of the wind-power station.
- Figure 2: shows a side view and a schematic diagram of the movements of the airflow around the wind turbine.
- Figure 3: shows a cross section and a schematic diagram of the movements of the airflow inside the turbine body.
- Figure 4: shows the same as figure 3, but on a larger scale.
- Figure 5: shows cross sections and schematic diagrams of the movements of the airflow through the vents by different wind directions.

In what follows, the reference numeral 20 will indicate a wind-power station according to the present invention. Like reference numerals indicate like or similar elements in the figures. The figures are shown schematic and simplified and the various elements are not necessarily drawn to scale.

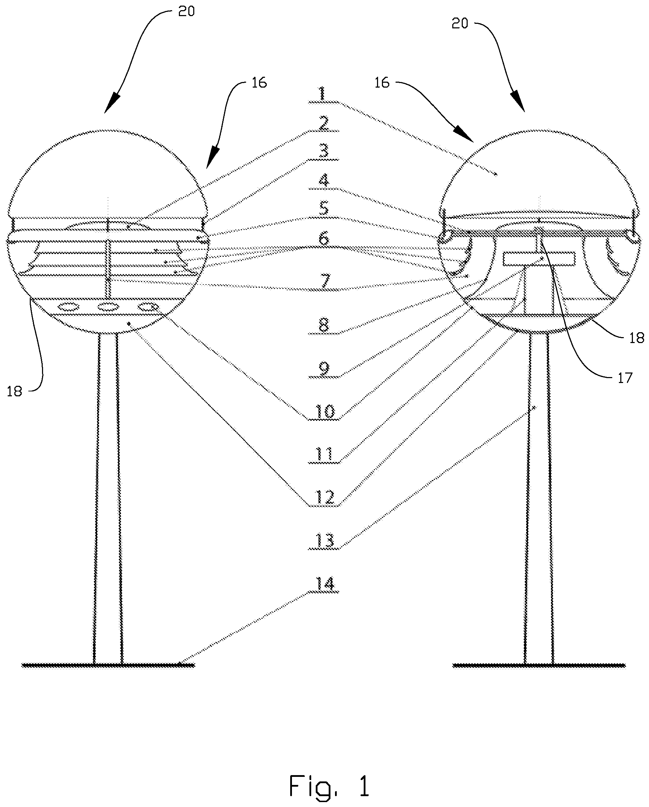

Figure 1 shows a wind-power station 20 according to the present invention. The wind-power station 20 is shown in a side view on the left in the figure and in section on the right in the figure. The wind-power station 20 is shown comprising a two-part housing 16, in which an upper part 1 of the housing, which functions as a deflector, has the shape of a hemisphere. Below the upper part of the housing, an inner deflector 2 of a smaller diameter is placed. The semi-circular outer deflector 1 has a symmetric form and is mounted on the lower part 18 of the housing by means of fastening devices 3, shown here as threaded bolts. The deflector 2 is attached to a wind wheel / turbine wheel 4 which is placed in an annular cowling 5. Below / downstream of the wind wheel, annular guiding surfaces 6 are installed. The guiding surface 6 is formed with a cross section like that of an aircraft wing, and three such guiding surfaces like that together form two slots in the shape of elongated, conical channels, where the airflow is guided in and accelerated in towards the wind wheel 4. The annular guiding surface 6 is installed by means of mounting plates / partitioning plates 7, which divide the guiding surfaces 6 and the lower part 18 of the housing into segments. The mounting plates 7 are oriented vertically, and together with a symmetric cover 8 of a conical shape they form a further conical channel arranged to direct air up to the wind wheel 4. The wind wheel 4 is connected to the electric generator 9 via a vertical driveshaft 17. The turbine housing 16 is symmetric around a vertical axis coinciding with the driveshaft 17 of the generator 9. In the lower part 18 of the housing, vents 10 are arranged, having for their purpose to ensure supply air to the inside of the symmetric cover 8 for cooling of the generator 9. The generator 9 is installed by means of a fastening device 11, here bolts, secured to the bottom side 12 of the lower part 18 of the turbine housing. The spherically shaped surface of the bottom side 12 of the housing also functions as a deflector and has for its purpose to give a smooth deflection of the airflow from the bottom side of the wind turbine. In the exemplary embodiment, the deflector 12 is mounted on a pylon 13 anchored to a foundation 14.

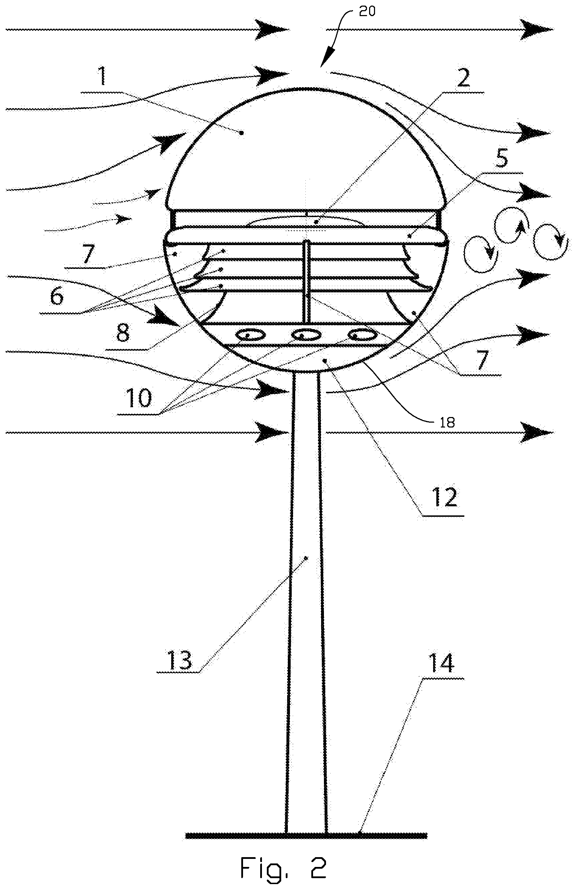

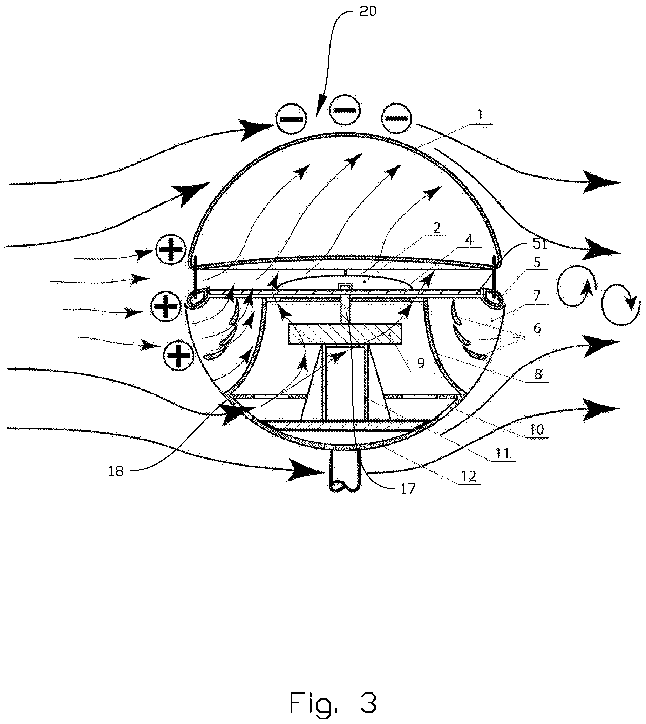

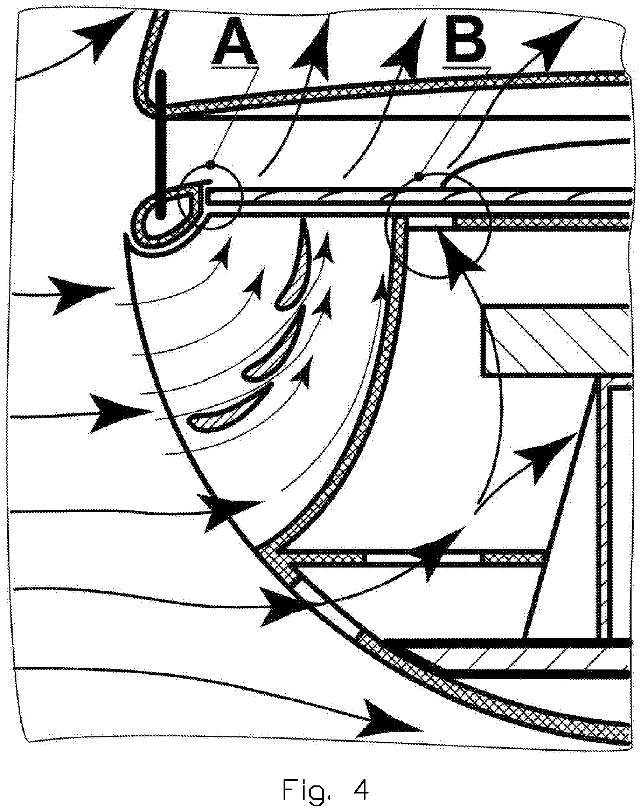

In what follows, reference will especially be made to figures 2-5, in which the wind direction is indicated as well, as arrows in the figures. In the presence of wind, independently of its direction, air masses will enter channels, formed by the cover 8 and the guiding surfaces 6, which change the direction of the airflow, directing and accelerating it towards the wind wheel 4. The mass of air changes direction from substantially horizontal to substantially vertical, as can be seen best in figures 3 and 4. The wind receiver, in the form of annular guiding surfaces 6, is formed as wing profiles. The guiding surfaces 6 are spaced apart and form two slotted channels. The airflow passes the slotted channels with acceleration and changes direction, at least partially because of the Coanda effect, as will be known to a person skilled in the art. The airflow is carried further up towards the wind wheel / turbine wheel 4, as can be seen best in figure 4. The Coanda effect is already a tested, well documented method of entrainment, in which a primary airflow is passed over a Coanda surface. A description of the characteristics of a Coanda surface and the effect of a fluid flow across a Coanda surface is found in many specialist-literature sources and articles.

The turbine blades of the wind wheel 4 has an aerodynamic profile, where the kinetic energy of the airflow is converted into rotary energy for the wind turbine. The turbine blades 4 are fixed to a vertical driveshaft 17 of an electric generator 9, which converts the mechanical rotary energy into electrical energy.

After having passed the rotary plane of the turbine blades 4, the speed of the airflow is reduced. According to a simplification of Bernoulli's equation, which describes the connection between the pressure and speed of a fluid flowing in a pipe, the pressure will decrease by increasing speed. The air pressure is thereby increased at the lower part of the deflector 1, upstream of the guiding surfaces 6, which is due to a decreasing speed of the airflow, and is reduced at the upper part of the deflector 1, downstream of the guiding surfaces 6, because of an increasing speed of the airflow. Because of this difference in pressure, the air is moved from areas with high pressure, that is to say from the bottom side of the disc-shaped deflector 1, to areas with low pressure, that is to say towards the upper part of the disc-shaped deflector 1 where the air pressure is lower.

To reduce overflow loss at the blade ends, the clearance between the blades of the wind wheel 4 and the inner surface of the cowling 5 is made with a minimal distance. A projection 51, arranged on the inside of the upper part of the cowling 5, downstream of the plane of rotation of the wind wheel, also has for its purpose to prevent overflow of the airflow and reduce a corresponding loss, see detail A in figure 4.

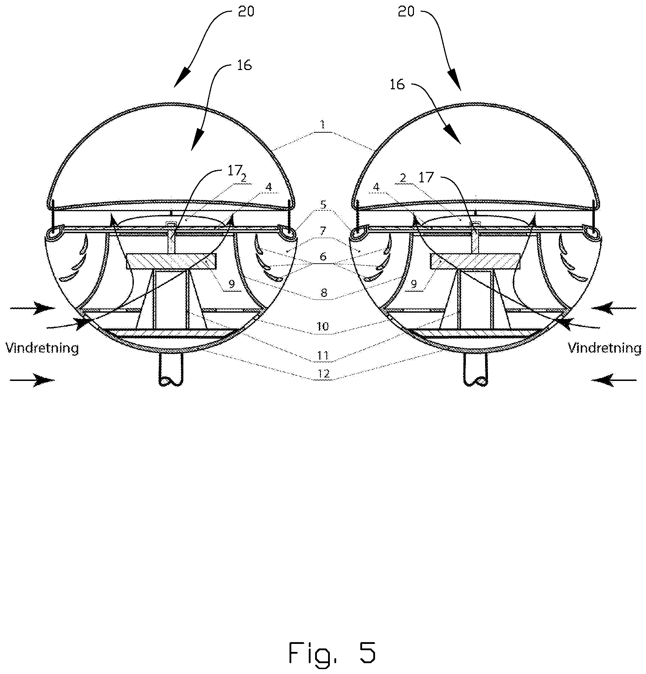

The vents 10 are evenly distributed along the circumference in the lower part 18 of the turbine housing 8 and ensure airflow therethrough and cooling of the electric generator 9 with an outlet through the wind wheel, see detail B in figure 4, independently of the wind direction, see figure 5.

The outer surfaces of the deflector 1 and the annular cowling 5 are provided with photovoltaic elements (solar cells) ensuring power production by means of solar radiation, independently of the wind speed or wind conditions.

The dimension of the disc-shaped deflector 1, which exceeds the diameter of the wind turbine 4, and the presence of the annular cowling 5 protect the wind turbine and ensure reliable operation of the power station even by unfavourable weather conditions (sleet, hail, subcooled rain, etc.).

The scope of protection is defined by the appended claims.

## Claims

1. A wind-power station (20) for power generation from kinetic energy of atmospheric air masses, the wind-power station (20) comprising:
- a symmetric turbine housing (16) formed with vents (10) which ensure supply air of atmospheric air masses into the turbine housing (16);
- an electric generator (9) arranged in the turbine housing (16), the generator (9) having a substantially vertically oriented driveshaft (17);
- a multi-bladed wind wheel (4) mounted substantially horizontally on the vertical driveshaft (17) of the generator (9); and
- a wind receiver comprising annular guiding surfaces (6), the guiding surfaces (6) being arranged to change the direction of the airflow in towards the multi-bladed wind wheel (4), - the wind receiver comprising three or more annular guiding surfaces (6),
each of the guiding surfaces (6) having an aerofoil-shaped profile, whereby the three or more annular guiding surfaces form two or more channels between them, arranged to accelerate an airflow in towards said multi-bladed wind wheel (4) and to reduce the turbulence upstream of the wind wheel (4),
**characterized in that** the wind-power station (20) further includes an annular cowling (5) arranged around the wind wheel (4), an inner surface of the annular cowling (5) being formed with a projection (51) which covers the radial outer edge of the wind wheel (4) downstream of the plane of rotation of the wind wheel.

2. The wind-power station (20) according to claim 1, wherein the vents (10) are evenly distributed over a lower part (18) of the turbine housing (16).

3. The wind-power station (20) according to any one of the preceding claims, wherein the outer surfaces of the wind-power station (20) are provided with photovoltaic elements for converting solar radiation into electric power.

4. The wind-power station (20) according to any one of the preceding claims, wherein the wind receiver includes exactly three annular guiding surfaces (6).

5. The wind-power station (20) according to any one of the preceding claims, wherein the wind-power station (20) is provided with a plurality of partitioning plates (7) arranged substantially vertically, to which the guiding surfaces (6) are attached, the partitioning plates being substantially equally angularly spaced apart, whereby the partitioning plates divides a lower part (18) of the wind-power station (20) into segments which are substantially equally large.

6. The wind-power station (20) according to claim 5, wherein the wind-power station includes 3, 4, 5 or 6 of said partitioning plates (7).

7. The wind-power station (20) according to any one of the preceding claims, wherein an upper part (1) of the turbine housing (16) is formed as a hemisphere.

## Patentansprüche

1. Windkraftstation (20) zur Stromerzeugung aus kinetischer Energie von atmosphärischen Luftmassen, wobei die Windkraftstation (20) aufweist:
- ein symmetrisches Turbinengehäuse (16), welches mit Luftlöchern (10) ausgebildet ist, welche Zugluft von atmosphärischen Luftmassen in das Turbinengehäuse (16) hinein sicherstellen;
- einen elektrischen Generator (9), welcher im Turbinengehäuse (16) angeordnet ist, wobei der Generator (9) eine im Wesentlichen vertikal orientierte Antriebswelle (17) aufweist;
- ein vielflügeliges Windrad (4), welches im Wesentlichen horizontal auf der vertikalen Antriebswelle (17) des Generators (9) befestigt ist; und
- einen Windempfänger, welcher ringförmige Führungsflächen (6) aufweist, wobei die Führungsflächen (6) angeordnet sind, um die Richtung des Luftstroms nach innen in Richtung des vielflügeligen Windrads (4) zu ändern, - wobei der Windempfänger drei oder mehr ringförmige Führungsflächen (6) aufweist,
wobei jede der Führungsflächen (6) ein tragflächenförmiges Profil aufweist, wobei die drei oder mehr ringförmigen Führungsflächen zwei oder mehr Kanäle zwischen einander bilden, welche angeordnet sind, um einen Luftstrom nach innen in Richtung des besagten vielflügeligen Windrads (4) zu beschleunigen und um die Turbulenz stromaufwärts des Windrads (4) zu verringern,
**dadurch gekennzeichnet, dass** die Windkraftstation (20) ferner eine ringförmige Verschalung (5) aufweist, welche um das Windrad (4) herum angeordnet ist, wobei eine Innenfläche der ringförmigen Verschalung (5) mit einem Vorsprung (51) ausgebildet ist, welcher die radiale Aussenkante des Windrads (4) stromabwärts von der Rotationsebene des Windrads überdeckt.

2. Windkraftstation (20) gemäss Anspruch 1, wobei die Luftlöcher (10) gleichmässig über einen unteren Teil (18) des Turbinengehäuses (16) verteilt sind.

3. Windkraftstation (20) gemäss einem der vorhergehenden Ansprüche, wobei die Aussenflächen der Windkraftstation (20) mit photovoltaischen Elementen ausgestattet sind, zur Umwandlung von Sonnenstrahlung in elektrische Energie.

4. Windkraftstation (20) gemäss einem der vorhergehenden Ansprüche, wobei der Windempfänger genau drei ringförmige Führungsflächen (6) aufweist.

5. Windkraftstation (20) gemäss einem der vorhergehenden Ansprüche, wobei die Windkraftstation (20) mit einer Vielzahl von Trennplatten (7) ausgestattet ist, welche im Wesentlichen vertikal angeordnet sind, und an welche die Führungsflächen (6) befestigt sind, wobei die Trennplatten im Wesentlichen gleichwinklig voneinander beabstandet sind, wodurch die Trennplatten einen unteren Teil (18) der Windkraftstation (20) in Segmente einteilen, welche im Wesentlichen gleich gross sind.

6. Windkraftstation (20) gemäss Anspruch 5, wobei die Windkraftstation (20) 3, 4, 5, oder 6 der besagten Trennplatten (7) aufweist.

7. Windkraftstation (20) gemäss einem der vorhergehenden Ansprüche, wobei ein oberer Teil (1) des Turbinengehäuses (16) als eine Halbkugel ausgebildet ist.

## Revendications

1. Une centrale éolienne (20) pour la production d'électricité à partir de l'énergie cinétique de masses d'air atmosphérique, la centrale éolienne (20) comprenant :
- un boîtier de turbine symétrique (16) formé avec des évents (10) qui assurent l'alimentation en air de masses d'air atmosphérique dans le boîtier de turbine (16) ;
- un générateur électrique (9) disposé dans le boîtier de turbine (16), le générateur (9) ayant un arbre d'entraînement (17) orienté sensiblement verticalement ;
- une roue éolienne à multi-pales (4) montée sensiblement horizontalement sur l'arbre d'entraînement vertical (17) du générateur (9) ; et
- un récepteur de vent comprenant des surfaces de guidage annulaires (6), les surfaces de guidage (6) étant agencées pour changer la direction du flux d'air entrant en direction de la roue éolienne à multi-pales (4),
- le récepteur de vent comprenant au moins trois ou plus surfaces de guidage annulaires (6), chacune des surfaces de guidage (6) ayant un profil en forme de voilure, les trois ou plus surfaces de guidage annulaires formant entre elles deux canaux ou plus, agencés pour accélérer un flux d'air entrant vers ladite roue éolienne à multi-pales (4) et pour réduire la turbulence en amont de la roue éolienne (4),
**caractérisée en ce que** la centrale éolienne (20) comprend en outre un capot annulaire (5) disposé autour de la roue éolienne (4), une surface intérieure du capot annulaire (5) étant formée avec une saillie (51) qui recouvre le bord extérieur radial de la roue éolienne (4) en aval du plan de rotation de la roue éolienne.

2. La centrale éolienne (20) selon la revendication 1, dans laquelle les évents (10) sont régulièrement répartis sur une partie inférieure (18) du boîtier de turbine (16).

3. La centrale éolienne (20) selon l'une quelconque des revendications précédentes, dans laquelle les surfaces extérieures de la centrale éolienne (20) sont pourvues d'éléments photovoltaïques pour convertir le rayonnement solaire en énergie électrique.

4. La centrale éolienne (20) selon l'une quelconque des revendications précédentes, dans laquelle le récepteur de vent comprend exactement trois surfaces de guidage annulaires (6).

5. La centrale éolienne (20) selon l'une quelconque des revendications précédentes, dans laquelle la centrale éolienne (20) est pourvue d'une pluralité de plaques de séparation (7) disposées sensiblement verticalement, auxquelles les surfaces de guidage (6) sont fixées, les plaques de séparation étant sensiblement également espacées angulairement, de sorte que les plaques de séparation divisent une partie inférieure (18) de la centrale éolienne (20) en segments qui sont sensiblement également grands.

6. La centrale éolienne (20) selon la revendication 5, dans laquelle la centrale éolienne comprend 3, 4, 5 ou 6 desdites plaques de séparation (7).

7. La centrale éolienne (20) selon l'une quelconque des revendications précédentes, dans laquelle une partie supérieure (1) du boîtier de turbine (16) est formée comme une hémisphère.
